## Europäisches Patentamt

## European Patent Office

## Office européen des brevets

(19)

(11) Publication number: **0 111 385**
A1

# (12) EUROPEAN PATENT APPLICATION

(21) Application number: 83306203.7

(22) Date of filing: 13.10.83

(51) Int. Cl.³: **C 09 D 3/82**
C 08 L 83/04, B 29 D 11/02

(30) Priority: 26.11.82 US 444551

(43) Date of publication of application:
20.06.84 Bulletin 84/25

(84) Designated Contracting States:
DE FR GB

(71) Applicant: DOW CORNING CORPORATION
3901 S. Saginaw Road
Midland Michigan 48640(US)

(72) Inventor: Baney, Ronald Howard
5704 Lantern Lane
Midland Michigan 48640(US)

(74) Representative: Laredo, Jack Joseph et al,
Elkington and Fife High Holborn House 52/54 High
Holborn
London, WC1V 6SH(GB)

(54) Antimony oxide-containing organosilicon resins.

(57) What is disclosed are antimony oxide-containing organosilicon resins which contain colloidal silica. These resins, when cured, are useful on various substrates as hard coatings and they are also useful as corrosion resistant coatings on metal substrates. A typical example of such a resin is a combination of 5 weight percent $Sb_2O_5$; 50 weight percent of $CH_3SiO_{3/2}$ and 45 weight percent of colloidal silica in an aqueous-alcoholic solution.

-1-

# ANTIMONY OXIDE-CONTAINING ORGANOSILICON RESINS

This invention relates to aqueous compositions which are useful for coating various substrates.

In one aspect, this invention relates to transparent protective coatings for plastics. In another aspect of this invention, these materials have been found to be highly adhesive as coatings on glass to lubricate the glass surface and impart mar-resistance and finally, these compositions have been found to be highly stable solutions wherein the inorganic oxides do not precipitate out of solution and the siloxane resin matrix does not have a tendency to readily gel.

There are many compositions in the prior art, such as silica-containing solutions, polysilicic acid fluorinated copolymer compositions and non-carbon containing metallic oxide/silicic acid compositions. These materials have found limited application because of certain disadvantages such as difficulty of application and non-adhesion to the substrates they are being used on. Those solutions tend to be unstable.

Thus, it is an object of this invention to provide compositions which are suitable for coating plastic and glass substrates. It is a further object of this invention to provide stable, aqueous compositions.

Clark, in U.S. Patent 3,986,997, issued October 19, 1976 describes pigment-free coating compositions containing an acidic dispersion of colloidal silica and hydroxylated silsesquioxane in an alcohol-water solution. This material is described in Clark as being useful as an abrasion resistant coating for plastics articles. This material suffers from the difficulty associated with its application to certain plastics substrates. A later patent issued to Ronald Baney and Frank Chi, on June 23, 1981 as U.S. Patent 4,275,118, discloses combinations of colloidal titania, colloidal silica and a hydroxylated silsesquioxane in an alcohol-water solution. This material is disclosed as an abrasion resistant protective coating which absorbs wavelengths of ultraviolet light thus preventing or inhibiting the degradation of the plastics substrate underneath the coating. The materials therein offer some protection to metal substrates as the data therein shows slightly better corrosion protection on metal substrates when compared to a coating similar to the inventive composition which did not contain titania.

Finally, in European Patent Application No. 0035609, there is disclosed a coating composition which is derived from a colloidal dispersion of a water insoluble metal, metal alloy or metal compounds and $RSi(OH)_3$, wherein R is an organic radical.

The present invention provides an aqueous composition which is a composition of matter comprising a dispersion of colloidal silica and colloidal antimony oxide in a water-alcohol solution of the partial condensate of a silanol having the formula $RSi(OH)_3$ in which R is selected from the group consisting of alkyl radicals of 1 to 3 inclusive carbon atoms and the phenyl radical, at least 10 weight percent of the silanol being $CH_3Si(OH)_3$, said composition containing 1 to 45 weight percent solids, said solids consisting essentially of 1 to 50 weight percent of colloidal antimony oxide, 1 to 50 weight percent of colloidal silica and 35 to 80 weight percent of said partial condensate.

As described above, the non-volatile solids portion of the composition is a mixture of colloidal silica and colloidal antimony oxide and a partial condensate of a silanol.

The partial condensate of a silanol is usually obtained from the condensation of $RSi(OH)_3$, wherein R is $CH_3-$.

As will be described in the examples, the $RSi(OH)_3$ materials are generated in situ by adding the corresponding trialkoxysilanes to acidic aqueous dispersions of colloidal silica and colloidal antimony oxide. Trialkoxysilanes useful in this invention include such silanes as $CH_3Si(OCH_3)_3$, $CH_3Si(OC_2H_5)_3$, $C_2H_5Si(OCH_3)_3$, $C_6H_5Si(OCH_3)_3$, $C_2H_5Si(OC_2H_5)_3$ and $C_3H_7Si(OCH_3)_3$. Most preferred for this invention is $CH_3Si(OCH_3)_3$. These silanes, when contacted by water, undergo a hydrolysis reaction which liberates the alcohol corresponding to the precursor alkoxy group, and the corresponding alkyl- or arylsilanols. Part of the alcohol present in the inventive compositions is generated in this manner. Upon generation of the silanol, there is a continuous condensation of the silanol groups to form the siloxane bonds resulting in the formation of, at first, hydroxy containing oligomer and then low molecular weight hydroxy containing polymers. The condensation does not go to completion and thus the materials formed in this manner are rich in hydroxy groups on silicon atoms which results in the siloxanes being soluble in the alcohol-water solvent. During cure of these siloxanes, the hydroxyl groups condense to give the silsesquioxanes, $RSiO_{3/2}$.

The colloidal silica component is an aqueous dispersion generally having a particle size in the range of 5 to 30 millimicrons in diameter. The silica dispersions are prepared by methods well known in the art and they are commercially available under such trade marks as "Ludox" and "Nalcoag". "Ludox" is manufactured by E.I. duPont de Nemours and Co., Inc. Wilmington, Delaware USA. "Nalcoag" is manufactured by the Nalco Chemical Co., Oak Brook, Illinois USA. It is preferred to use colloidal silica of 10 to 20 millimicron particle size. These materials are available in both basic and acidic hydrosols. Colloidal silica is distinguished from other water dispersible forms of $SiO_2$, such as nonparticulate polysilicic acid or alkali metal silicate solutions.

The antimony oxides useful in this invention are colloidal antimony oxides. These materials are commercially available. One such material is the colloidal antimony oxide sold under the registered trademark "Nyacol". These antimony oxides are available in concentrations of 10 to 50 weight percent in water and have an approximate particle size of 15 millimicrons. These antimony oxide solutions generally have a pH in the acid range which means that they lend themselves quite readily to this invention.

For this invention, the colloidal silica and antimony oxide are dispersed in a solution of the partial condensate carried in a lower aliphatic alcohol-water solution. Suitable lower aliphatic alcohols include methanol, ethanol, n-propanol, isopropanol, n-butanol, iso-butanol and tertiary butanol. Mixtures of these alcohols can be used and, for purposes of this invention, mixtures are preferred, especially a mixture of methanol and/or ethanol with n-propanol. When the compositions are used for coatings for plastics substrates, it is preferred to utilize at least 50 weight percent of isopropanol in the alcohol mixture to obtain optimum adhesion of the coating. When the compositions are utilized as coatings for other substrates, it is preferred that polar co-solvents also be used. Such polar solvents include, but are not limited to, ethylene glycol monoethyl ether acetate, ethylene glycol dimethylether and the like. The solvent system should contain from 20 to 75 weight percent alcohol to ensure solubility of the partial condensate in the composition. Optionally, one can utilize an additional water-miscible polar solvent in conjunction with the alcohol solvents described above. These solvents should be utilized in minor amounts, such as up to 20 weight percent of the solvents. These solvents may be, for example, acetone, butylcellosolve, methylethylketone and the like.

The compositions are generally prepared by adding the trialkoxysilanes, such as $RSi(OCH_3)_3$, to the aqueous colloidal silica and colloidal antimony oxide generally at a pH of less than 7, to form a sol. If the pH of the sol is not already in the acid range, it is preferred to add acids, either organic or inorganic, to the sol as it is necessary to maintain the sol stable. It is known that the higher pH's tend to cause premature gelation. For example, a pH of 10.5 causes the system to gel within one hour while a pH of 8 allows the sol to remain stable for several hours or even several days depending on the ratio of the solid components to each other, the percent nonvolatile solids, and the solvent system being used. It is preferred, however, to maintain the system acidic when the reactants are first contacted and hydrolysis takes place. Such an acidic pH should preferably be less than 5 as the lower pH helps maintain the stability of the composition. Thus, the acid can be added to either the silane or the colloidal substances prior to mixing the components. Acids that have been found useful for this invention are organic acids such as formic and acetic or mineral acids such as hydrochloric. Upon contact with water in the presence of the acid, the alkoxy groups on the silane are hydrolyzed and the corresponding alcohol is generated. Depending upon what is desired regarding the percentage of solids in the final composition, additional solvent or water can be added to the composition. The mixture usually exotherms slightly owing to the hydrolysis of the alkoxysilane. The exotherm, if any, is easily controlled because by-produced alcohol will eventually azeotrope and cool the reaction mass. The reaction mixture should be well mixed and allowed to age for a short time to ensure the formation of the partial condensate. The compositions at this point are clear or slightly opaque and are low in viscosity.

When the compositions are to be used as coatings, buffered latent condensation catalysts can be added to the composition so that milder curing conditions can be utilized to obtain the optimum abrasion resistance in the final coating. Alkali metal salts of carboxylic acids, such as potassium formate, are one class of such latent catalysts. The amine carboxylates and quaternary ammonium carboxylates are another such class of latent catalysts. Of course, the catalysts must be soluble or at least miscible in the cosolvent system. The catalysts are latent to the extent that at room temperature they do not appreciably shorten the bath life of the composition. Buffered catalysts are used to avoid effects on the pH of the composition. Certain of the commercially available colloidal silica dispersions contain free alkali metal base which reacts with the organic acid during the adjustment of pH to generate the carboxylate catalysts in situ. This is particularly true when starting with a sol having a pH of 8 or 9. The compositions can be catalyzed by addition of carboxylates such as dimethylamine acetate, ethanolamine acetate, dimethylaniline formate, tetraethylammonium benzoate, sodium acetate, sodium propionate, sodium formate or benzyltrimethylammonium acetate. The amount of catalyst can be varied depending upon the desired curing condition, but at 1.5 weight percent catalyst in the composition, the bath life is shortened and optical properties of the coating may be impaired. It is preferred to utilize from 0.05 to 1 weight percent of the catalyst.

To provide the greatest stability in the dispersion form while obtaining optimum properties in the cured product, it is preferred to utilize a coating composition having a pH in the range of 4 to 5 which contains 5 to 25 weight percent solids; the silica portion being present at 25 to 45 weight percent based on the solids present in the mixture and having a particle size in the range of 5 to 30 millimicrons; the colloidal antimony oxide being present at 5 to 25 weight percent based on total solids and having a particle size in the range of 10 to 20 millimicrons; the partial condensate of $CH_3Si(OH)_3$ being present in an amount in the range of 40 to 65 weight percent of the total solids in a cosolvent of methanol, isopropanol and water, the alcohols representing from 30 to 60 weight percent of the cosolvent. When a catalyst is required for a coating composition of this invention, the catalyst is preferably selected from the group consisting of sodium acetate and benzyltrimethylammonium acetate, being present in an amount in the range of 0.05 to 0.5 weight percent of the composition. Such a composition is relatively stable, having a bath life of approximately one month, and, when coated onto a substrate, can be cured in a relatively short time at temperatures in the range of 75°-125°C. to provide a transparent, hard, corrosion resistant, surface coating.

The coating compositions of the invention can be applied to solid substrates by conventional methods, such as flowing, spraying or dipping to form a continuous surface film. Although substrates of soft plastics sheet material show the greatest improvement upon application of the coating, the composition can be applied to other substrates, such as wood, metal, printed surfaces, leather, glass, ceramics and textiles. As noted above, the compositions are especially useful as coatings for dimensionally stable synthetic organic polymeric substrates in sheet or film form, such as acrylic polymers, for example, polymethylmethacrylate, polyesters, for example, poly(ethyleneterephthalate) and polycarbonates, such as poly(diphenylolpropane)carbonate and poly(diethylene glycol bis-allyl)carbonate, polyamides, polyimides, copolymers of acrylonitrile-styrene, styrene-acrylonitrile-butadiene copolymers, polyvinyl chloride, butyrates, polyethylene and the like. Transparent polymeric materials coated with these compositions are useful as flat or curved enclosures, such as windows, skylights and windshields, especially for transportation equipment. Plastics lenses, such as acrylic or polycarbonate ophthalmic lenses, can be coated with the compositions of the invention. In certain applications requiring high optical resolution, it may be desirable to filter the coating composition prior to applying it to the substrate. In other applications, such as corrosion-resistant coatings on metals, the slight haziness (less than 5%) obtained by the use of certain formulations, such as those containing citric acid and sodium citrate, is not detrimental and filtration is not necessary.

By choice of proper formulation, including solvent, application conditions and pretreatment (including the use of primer) of the substrate, the coatings can be adhered to substantially all solid surfaces. A hard solvent-resistant surface coating is obtained by removal of the solvent and volatile materials. The composition will air dry to a tack-free condition, but heating in the range of 50 to 150°C is necessary to obtain condensation of residual silanols in the partial condensate. This final cure results in the formation of silsesquioxane of the formula $RSiO_{3/2}$ and greatly enchances the hardness of the coating. The coating thickness can be varied by means of the particular application technique, but coatings of 0.5 to 20 micron preferably 2-10 micron thickness are generally utilized. Especially thin coatings can be obtained by spin coating.

The following examples are illustrative and not to be construed as limiting the invention delineated in the claims. The following test methods were used to evaluate the compositions.

Hardness: This test was performed on the coating
residing on the substrate. In this test,
pencils are employed having varying degrees of
lead hardness corresponding to the scale 1B,
2B, 3B, F, H, 2H, 3H, 4H, 5H etc. These values
represent a progression in hardness. Pencil
leads of increasing hardness are held at a 45°C
angle relative to the coating as laid down on
the substrate and moderate force is applied
until the coating is removed. The next softest
pencil lead that did not tear the coating is
the "pencil hardness" for that coating.

Adhesion Test: This test is to measure the adhesion of
the coating to the substrate by pulling Scotch
brand tape three times from a 1 1/8 inch crosshatched grid which has been inscribed in the
coating. The % of grid squares remaining are
recorded as % adhesion.

Commercial antimony oxide sols were obtained
from Nyacol Inc., Ashland, Mass. 01721, U.S.A.; the
physical properties of the antimony oxides are given in
Table I.

Example 1

Several compositions were prepared which
contained $SiO_2$, $Sb_2O_5$ and $CH_3SiO_{3/2}$. The compositions
were prepared treating the antimony oxide and silica sol,
in a glass vial, with acetic acid to give a pH of
3.4. The necessary amount of silane was added at room
temperature to give the required amount of $CH_3SiO_{3/2}$ as
shown below. When coated, the coatings required primers to adhere to polycarbonate but good adhesion and coating properties were obtained on glass and acrylate substrates without the use of primers. The results can be found below in Table II. Sample "A" is the hydrolyzate without dilution. Sample "B" is an aliquot of Sample "A" diluted to 20 weight percent solids and Sample "C" is an aliquot of Sample "B" that contains about 1 weight percent sodium acetate (10 grams Na acetate; 45 grams isopropanol; 45 grams $H_2O$) as the catalyst. The glass panels were cured at 110°C for 6 hours and the acrylate panels were cured at 80°C for 6 hours.

When the amount of colloidal silica in the formulation was increased, much better results on an acrylic substrate were obtained. The results can be found in Table III (below).

TABLE I

Properties of "NYACOL" Antimony Oxide Sols

| Property | Product | | | |
|---|---|---|---|---|
| | Nyacol A-1510LP | Nyacol A-1510 | Nyacol A-1530 | Nyacol A-1550 |
| Weight % $Sb_2O_5$ | 10 | 10 | 30 | 50 |
| Average particle Size in millimicrons | 15 | 15 | 15 | 15 |
| pH @ 25°C | 2.5 | 5.0 | 4 to 6 | 4 to 6 |
| Density:pounds/gal | 9.17 | 9.17 | 11.45 | 15.1 |
| Spec. Gravity | 1.1 | 1.1 | 1.37 | 1.81 |
| Viscosity | 2.2 | 2.2 | 5.0 | 20.0 |

## TABLE II

### Results of Testing on Glass Panels

| Sample | $Sb_2O_5$ | Weight % $SiO_2$ | $CH_3SiO_{3/2}$ | Pencil Hardness | Adhesion | % Solids | % Appearance |
|--------|-----------|------------------|------------------|-----------------|----------|----------|--------------|
| A | 25 | 12.5 | 62.5 | 6H | 100 | 40 | Sl. Hazy |
| B | " | " | " | 6H | 100 | 20 | Translucent |
| C | " | " | " | 6H | 100 | 20 | Translucent |

### Results of Testing on Acrylic Panels

| Sample | Pencil Hardness | % Adhesion |
|--------|-----------------|------------|
| A | 3H | 50 |
| B | 3H | 100 |
| C | 3H | 100 |

0111385

## TABLE III

### Results of Testing on Glass and Acrylic Panels

| Sample | Weight % $Sb_2O_5$ | $SiO_2$ | $CH_3SiO_{3/2}$ | GLASS | | ACRYLIC | | | Appearance |
| | | | | PH | % AD | PH | % AD | % Solids | |
|---|---|---|---|---|---|---|---|---|---|
| D | 15 | 17.5 | 67.5 | 6H | 100 | 4H | 100 | 20 | Sl. Hazy |
| E | 15 | 17.5 | 67.5 | 6H | 100 | 3H | 100 | 20 | Transluscent |
| F | 35 | 7.5 | 57.5 | 6H | 100 | 2H | 100 | 20 | Sl. Hazy |
| G | 35 | 7.5 | 57.5 | 6H | 100 | 2H | 100 | 20 | Transparent |

-15-

Claims:

1.    A composition of matter comprising a dispersion of colloidal silica and colloidal antimony oxide in a water-alcohol solution of the partial condensate of a silanol having the formula $RSi(OH)_3$ in which R is selected from the group consisting of alkyl radicals of 1 to 3 inclusive carbon atoms and the phenyl radical, at least 10 weight percent of the silanol being $CH_3Si(OH)_3$, said composition containing 1 to 45 weight percent solids, said solids consisting essentially of 1 to 50 weight percent of colloidal antimony oxide, 1 to 50 weight percent of colloidal silica and 35 to 80 weight percent of said partial condensate.

2.    A composition of matter as claimed in claim 1 wherein there is present 20 weight percent solids, the solids comprising 50 weight percent of the partial condensate which is $CH_3Si(OH)_3$; 45 weight percent of colloidal silica and 5 weight percent of colloidal antimony oxide, all based on the total weight of solids present in the composition.

3.    A solid substrate when coated with the cured composition of claim 1.

4.    A coated substrate as claimed in claim 3 wherein the substrate is a plastics material.

5.   A coated substrate as claimed in claim 4 wherein the substrate is a plastics lens.

6.   A coated substrate as claimed in claim 4 wherein the substrate is a plastics sheet.

## European Patent Office

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| P,X | WO-A-8 301 256 (SWEDLOW, INC.)<br>* Whole document * | 1-6 | C 09 D 3/82<br>C 08 L 83/04<br>B 29 D 11/02 |
| A,D | US-A-3 986 997 (H. CLARK)<br>* Claims; column 4, lines 29-53 * | 1-6 | |
| A | GB-A-2 041 956 (DOW CORNING)<br>* Claims * | 1-6 | |

TECHNICAL FIELDS SEARCHED (Int. Cl. 3)

C 08 K
C 08 L
C 09 D

The present search report has been drawn up for all claims

| Place of search<br>THE HAGUE | Date of completion of the search<br>07-03-1984 | Examiner<br>HOFFMANN K.W. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82